# EUROPEAN PATENT SPECIFICATION

(11) **EP 4 552 877 B1**
(45) Date of publication and mention of the grant of the patent: **15.04.2026**
(21) Application number: 23833571.5
(22) Date of filing: 12.05.2023
(51) Int. Cl.: B60K 1/00, B60K 6/40, B60K 17/12, B60R 16/02

(54) **VEHICLE**
FAHRZEUG
VÉHICULE

(30) Priority: 05.07.2022 JP 2022108526
(43) Date of publication of application: 14.05.2025
(73) Proprietor: Jatco Ltd., Shizuoka 417-8585 (JP)
(72) Inventor: MAEDA, Atsushi, Fuji-shi, Shizuoka 417-8585 (JP); SUWABAYASHI, Akira, Fuji-shi, Shizuoka 417-8585 (JP)
(74) Representative: Hoefer & Partner Patentanwälte mbB
(86) International application number: PCT/JP2023/017895
(87) International publication number: WO 2024/009606

(56) References cited:
- WO-A1-2017/114422
- WO-A1-2022/108444
- JP-A- 2011 020 628
- JP-A- 2012 183 903
- JP-A- 2013 159 224
- JP-A- 2017 190 117
- JP-A- 2022 016 805
- US-A1- 2021 138 885
- US-B2- 8 172 019

## Description

### TECHNICAL FIELD

The present invention relates to a vehicle.

### BACKGROUND ART

Patent Document 1 discloses a vehicle in which a vehicle body-side device and a vehicle wheel-side device are connected by a wire harness.

Patent Document 2 relates to an electric drive axle in a vehicle. The electric drive axle includes, in one example, a housing configured to enclose an electric motor-generator and a gearbox. In the electric drive axle, the housing includes a first section that is removably coupled to a second section, the second section at least partially encloses the gearbox. The first section includes a first axle shaft opening, and the second section includes a second axle shaft opening that is laterally aligned with the first axle shaft opening.

### PRIOR ART DOCUMENT

### PATENT DOCUMENT

Patent Document 1: WO 2021/166138 A1
Patent Document 2: US 2021/0138885 A1

### SUMMARY OF INVENTION

### PROBLEM TO BE SOLVED BY THE INVENTION

In the vehicle described in Patent Document 1, when the wire harness between the vehicle body-side device and the vehicle wheel-side device is connected at the shortest distance, the wire harness passes through the air. When the vehicle body-side device and the vehicle wheel-side device swing with the swing of a vehicle body, the wire harness also swings and expands or contracts, and thus the durability of the wire harness may be impacted.

The present invention has been made in view of such a technical problem, and an object thereof is to improve the durability of an electric wire that connects units mounted on a vehicle.

### MEANS FOR SOLVING THE PROBLEM

According to one aspect of the present invention, a vehicle includes a first unit on which a rotary electric machine is mounted, a second unit on which an inverter is mounted, an electric wire that electrically connects the first unit and the second unit, and a vehicle wheel that is dynamically connected downstream of the first unit via an axle, in which the electric wire has a portion routed along the axle.

### EFFECT OF THE INVENTION

According to this aspect, an object is to improve the durability of the electric wire that connects the units mounted on the vehicle.

### BRIEF DESCRIPTION OF DRAWINGS

[FIG. 1] FIG. 1 is a perspective view showing an electric wire portion connecting a first unit and a second unit of a vehicle according to an embodiment of the present invention.
[FIG. 2] FIG. 2 is a top view showing the electric wire portion connecting the first unit and the second unit of the vehicle according to the embodiment of the present invention.
[FIG. 3] FIG. 3 shows side views each showing an attachment position of a torque rod according to the embodiment of the present invention.
[FIG. 4] FIG. 4 is an enlarged view of the electric wire portion shown in FIG. 2.
[FIG. 5] FIG. 5 is a diagram showing a modification of the vehicle according to the embodiment of the present invention.

### DESCRIPTION OF EMBODIMENTS

Hereinafter, an embodiment of the present invention will be described with reference to the accompanying drawings.

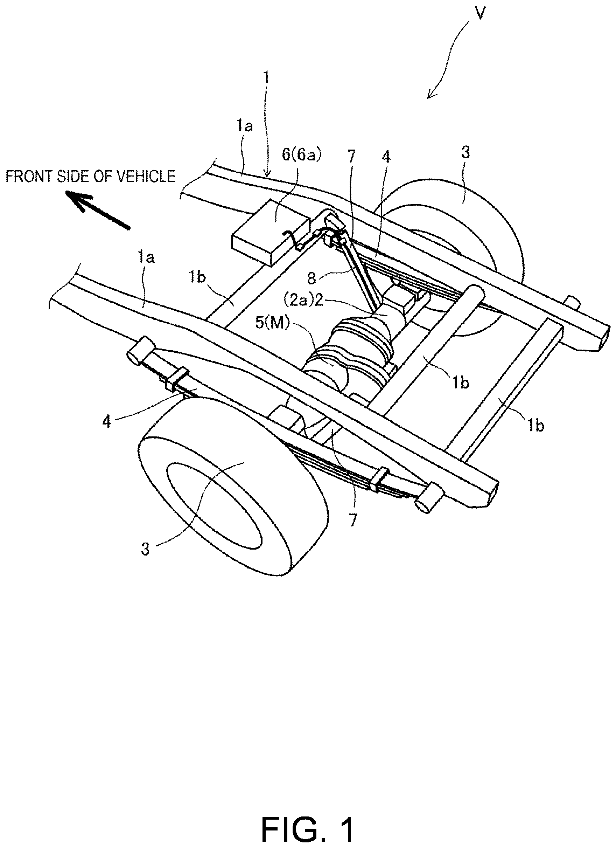

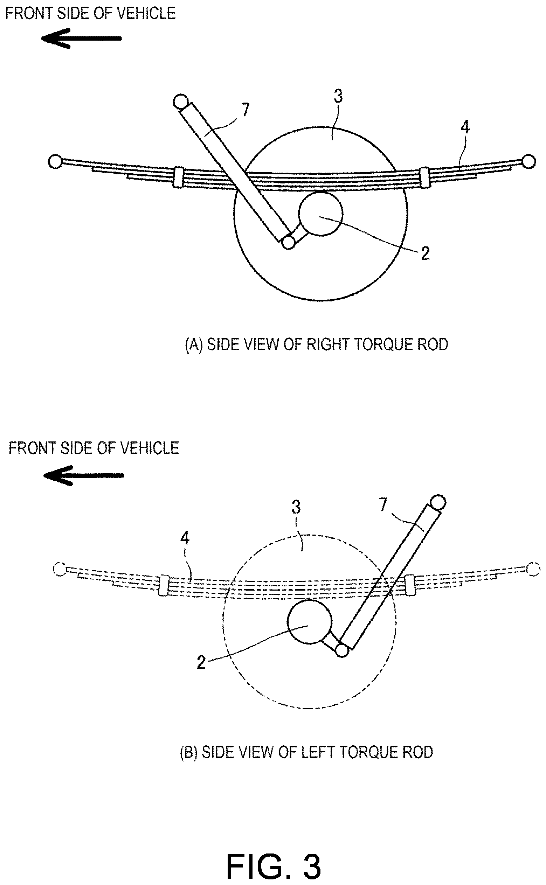

A vehicle V according to the present embodiment is an electric vehicle using a motor as a drive source. As shown in FIGS. 1 to 4, the vehicle V includes a frame 1, an axle 2, vehicle wheels 3, a plurality of leaf springs 4, an electric unit 5 as a first unit, and a control unit 6 as a second unit.

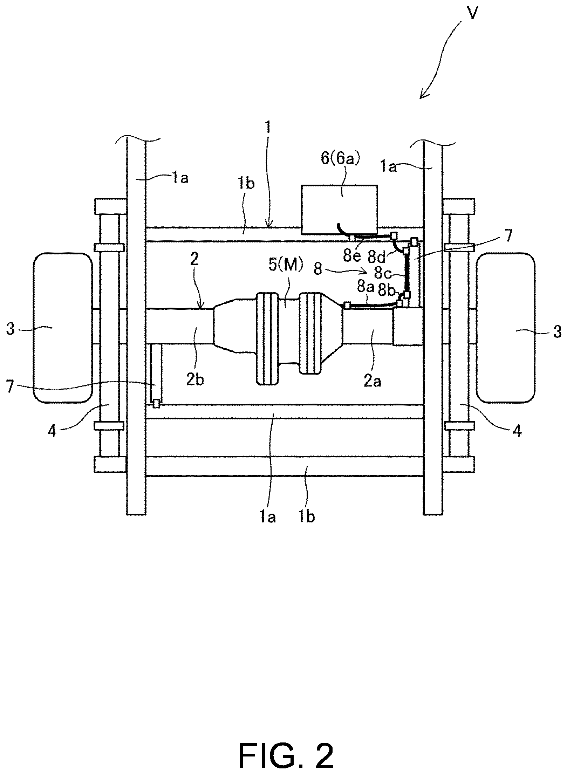

As shown in FIGS. 1 and 2, the frame 1 includes a pair of side members 1a extending in a front-rear direction of the vehicle V at an interval, and a plurality of cross members 1b each extending in a width direction of the vehicle V and each having both ends respectively connected to the pair of side members 1a. Each side member 1a and each cross member 1b are made of, for example, a steel material or an aluminum material.

The axle 2 includes a right axle 2a and a left axle 2b. The vehicle wheels 3 are attached to end portions of the right axle 2a and the left axle 2b, respectively. The axle 2 dynamically connects the electric unit 5 and the vehicle wheels 3 located downstream of a power transmission path.

The axle 2 is suspended from the frame 1 via the plurality of stacked leaf springs 4. That is, the vehicle V has a rigid axle type suspension structure. Further, the axle 2 is connected to the cross members 1b via torque rods 7 as rods extending in a direction intersecting the axle 2. Both ends of each torque rod 7 are swingably supported by brackets respectively attached to the axle 2 and the cross member 1b.

The electric unit 5 is attached onto the axle 2. The electric unit 5 includes, in a case, a rotary electric machine M and a differential gear (not shown) that distributes an output of the rotary electric machine M to the right axle 2a and the left axle 2b.

The rotary electric machine M functions as the drive source of the vehicle V. The rotary electric machine M is implemented by, for example, a three-phase AC permanent magnet synchronous motor. The rotary electric machine M is driven by electric power supplied from a battery (not shown) provided in a vehicle body via the control unit 6. Rotational power generated by the rotary electric machine M is transmitted to the vehicle wheels 3 via the differential gear (not shown), the right axle 2a, and the left axle 2b.

Further, the electric unit 5 has a regeneration function of receiving the rotational power from the vehicle wheels 3 and generating electric power for charging the battery during deceleration or braking of the vehicle V.

An inverter device 6a having an inverter circuit and a converter circuit is mounted in the control unit 6. In the vehicle V, the control unit 6 is attached to a lower portion of the vehicle body, for example, in the vicinity of the cross member 1b. The electric unit 5 and the control unit 6 are electrically connected by a wire harness 8 (electric wire).

As described above, since the vehicle V has the rigid axle type suspension structure, for example, when the vehicle V travels on a rough road or the like, the axle 2 vigorously swings. At this time, since the electric unit 5 is attached onto the axle 2, the electric unit 5 also vigorously swings. When the electric unit 5 vigorously swings, the wire harness 8, which connects the control unit 6 provided in the vehicle body and the electric unit 5 attached onto the axle 2, vigorously swings, and the durability of the wire harness 8 and connector portions of the wire harness 8 may decrease.

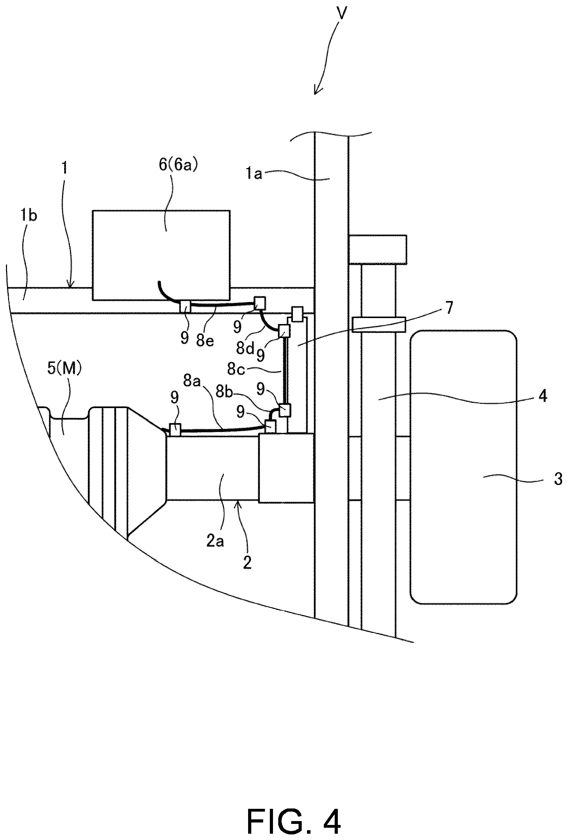

Therefore, in the vehicle V according to the present embodiment, in order to prevent the wire harness 8 from vigorously swinging, the wire harness 8 is routed along the axle 2, the torque rod 7, and the cross member 1b. Hereinafter, a routing method of the wire harness 8 will be specifically described with reference to FIG. 4. FIG. 4 is an enlarged view of a portion in which the wire harness 8 is routed shown in FIG. 2.

As shown in FIG. 4, the wire harness 8 includes a first wiring portion 8a routed along the right axle 2a, a second wiring portion 8c routed along the torque rod 7, a third wiring portion 8e routed along the cross member 1b, a first bent portion 8b connecting the first wiring portion 8a and the second wiring portion 8c, and a second bent portion 8d connecting the second wiring portion 8c and the third wiring portion 8e.

The first wiring portion 8a and the first bent portion 8b are electrically connected by one connection portion 9 attached to the right axle 2a. The first bent portion 8b and the second wiring portion 8c, and the second wiring portion 8c and the second bent portion 8d are electrically connected by connection portions 9 attached to the torque rod 7. The second bent portion 8d and the third wiring portion 8e are electrically connected by one connection portion 9 attached to the cross member 1b. Each connection portion 9 is a member that electrically connects adjacent wires to each other, and is implemented by a connector, a terminal block, or the like.

The first bent portion 8b is a portion that absorbs a tensile force or a compression force acting on the connection portions with the first wiring portion 8a and the second wiring portion 8c when the axle 2 and the torque rod 7 are relatively displaced. The first bent portion 8b is formed by bending the electric wire. Preferably, the first bent portion 8b is formed to bend the electric wire in a direction away from the vehicle wheel 3. By forming the first bent portion 8b to be bent in the direction away from the vehicle wheel 3 in this manner, for example, when the first bent portion 8b is bent, it is possible to prevent the first bent portion 8b from coming into contact with the vehicle wheel 3 or a rotatable element rotating together with the vehicle wheel 3 such as a brake (not shown).

The second bent portion 8d is a portion that absorbs a tensile force or a compression force acting on the connection portions with the second wiring portion 8c and the third wiring portion 8e when the torque rod 7 and the frame 1 (cross member 1b) are relatively displaced. The second bent portion 8d is formed by bending the electric wire. Preferably, the second bent portion 8d is formed to bend the electric wire in the direction away from the vehicle wheel 3. By forming the second bent portion 8d to be bent in the direction away from the vehicle wheel 3 in this manner, for example, when the second bent portion 8d is bent, it is possible to prevent the second bent portion 8d from coming into contact with the vehicle wheel 3 or the rotatable element rotating together with the vehicle wheel 3 such as a brake (not shown).

In this way, in the vehicle V according to the present embodiment, the wire harness 8 is routed along the axle 2, the torque rod 7, and the cross member 1b, and is supported by the connection portions 9 attached to the axle 2, the torque rod 7, and the cross member 1b. Accordingly, when the vehicle V vigorously vibrates, the wire harness 8 can be prevented from vigorously swinging.

According to the above embodiment, the case in which the wire harness 8 is routed along the axle 2, the torque rod 7, and the cross member 1b by using the connection portions 9 attached to the axle 2, the torque rod 7, and the cross member 1b has been described as an example, but the present invention is not limited thereto, for example, the wire harness 8 may be fixed to outer peripheral surfaces of the axle 2, the torque rod 7, and the cross member 1b by other fixing means such as binding bands. In this case, the electric unit 5 and the control unit 6 may be connected by one wire harness 8, and the connection portions 9 may be provided. Also in this case, by providing portions corresponding to the first bent portion 8b and the second bent portion 8d, it is possible to absorb the tensile force or the compression force caused by the relative displacement among the axle 2, the torque rod 7, and the cross member 1b.

Further, according to the above embodiment, the case in which the wire harness 8 is routed along the torque rod 7 has been described as an example, but when there is a member (for example, a lateral rod, an upper ring, or a lower link) that connects the axle 2 and the frame 1, the wire harness 8 may be routed along the member or routed to pass through the interior of the member.

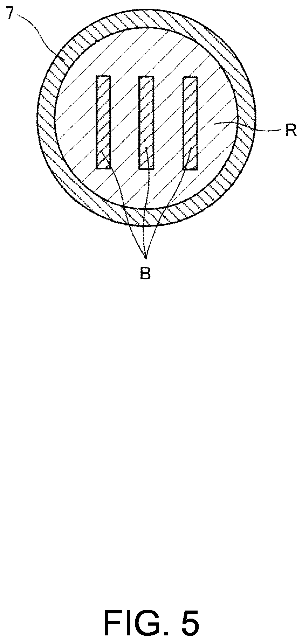

Further, the wire harness 8 may be routed to pass through the interior of the axle 2 or the torque rod 7. In this case, an electric wire may be routed inside the axle 2 or the torque rod 7, and as shown in FIG. 5, bus bars B may be routed inside the torque rod 7 instead of the electric wire. In the case in which the bus bars B are routed, a resin R is filled in the torque rod 7, thereby preventing the bus bars B from rattling in the torque rod 7. Further, the resin R can ensure insulation between the bus bars B or between the bus bars B and the torque rod 7. The same structure can be adopted for the routing of the wire harness 8 in the axle 2.

In addition, according to the above embodiment, the suspension structure using the leaf springs 4 has been described as an example, but the present invention is also applicable to a suspension structure using a coil spring and a shock absorber.

The configurations, functions, and effects of the embodiment of the present invention configured as described above will be collectively described.
(1) The vehicle V includes the electric unit 5 (first unit) on which the rotary electric machine M is mounted, the control unit 6 (second unit) on which the inverter device 6a (inverter) is mounted, the wire harness 8 (electric wire) that electrically connects the electric unit 5 (first unit) and the control unit 6 (second unit), and the vehicle wheels 3 that are dynamically connected downstream of the electric unit 5 (first unit) via the axle 2, in which the wire harness 8 (electric wire) has the portion (first wiring portion 8a) routed along the axle 2.

According to this configuration, the wire harness 8 (electric wire) is not extended in a straight line from the electric unit 5 (first unit) toward the control unit 6 (second unit), but the wire harness 8 (electric wire) is provided to extend from the electric unit 5 (first unit) toward the vehicle wheel 3 in a detoured manner. At this time, since the wire harness 8 (electric wire) is routed along the axle 2, it is possible to restrain the swing of the wire harness 8 (electric wire). Accordingly, the durability of the wire harness 8 (electric wire) connecting the electric unit 5 (first unit) and the control unit 6 (second unit) can be improved.

When the wire harness 8 (electric wire) is routed along an outer surface of the axle 2, the bending can be reduced by attaching the connection portions 9 to the axle 2. On the other hand, when the wire harness 8 (electric wire) is located inside the axle 2, it is possible to further reduce the influence of the swing of the wire harness 8 (electric wire).

(2) The vehicle V includes the torque rods 7 (rod) that extend in the direction intersecting the axle 2, and the wire harness 8 (electric wire) has the portion (second wiring portion 8c) routed along the torque rod 7 (rod).

According to this configuration, since the wire harness 8 (electric wire) is routed along the torque rod 7 (rod), it is possible to restrain the swing of the wire harness 8 (electric wire). When the wire harness 8 (electric wire) is routed along an outer surface of the torque rod 7 (rod), the bending can be reduced by attaching the connection portions 9 to the torque rod 7 (rod). On the other hand, when the wire harness 8 (electric wire) is located inside the torque rod 7 (rod), it is possible to further reduce the influence of the swing of the wire harness 8 (electric wire).

(3) In the vehicle V, the wire harness 8 (electric wire) has the portion passing through the interior of the torque rod 7 (rod).

According to this configuration, it is possible to further reduce the influence of the swing of the wire harness 8 (electric wire).

(4) In the vehicle V, the wire harness 8 (electric wire) has the bent portion (first bent portion 8b) that is bent between the portion (first wiring portion 8a) routed along the axle 2 and the portion (second wiring portion 8c) routed along the torque rod 7 (rod).

According to this configuration, the portion of the wire harness 8 (electric wire) connecting the axle 2 and the torque rod 7 (rod) is locally bent, and thus the bent portion can be set to a necessary minimum size, and the connection from the axle 2 to the torque rod 7 (rod), which extends in the intersecting direction, can be smoothly performed by the bending. In addition, the tensile force or the compression force caused by the relative displacement between the axle 2 and the torque rod 7 can be restrained from acting on the wire harness 8 (electric wire).

(5) In the vehicle V, the bent portion (first bent portion 8b) is bent in the direction away from the vehicle wheel 3.

### DESCRIPTION OF REFERENCE SIGNS

- 1: frame
- 1a: side member
- 1b: cross member
- 2: axle
- 3: vehicle wheel
- 5: electric unit (first unit)
- 6: control unit (second unit)
- 6a: inverter device (inverter)
- 7: torque rod (rod)
- 8: wire harness (electric wire)
- 8a: first wiring portion
- 8b: first bent portion
- 8c: second wiring portion
- 8d: second bent portion
- 8e: third wiring portion
- 9: connection portion
- M: rotary electric machine

## Claims

1. A vehicle (V) comprising:
a first unit (5) on which a rotary electric machine (M) is mounted;
a second unit (6) on which an inverter (6a) is mounted;
an electric wire (8) that electrically connects the first unit (5) and the second unit (6); and
a vehicle wheel (3) that is dynamically connected downstream of the first unit (5) via an axle (2),
**characterized in that**
the electric wire (8) is supported by the axle (2), and
the electric wire (8) has a portion (8a) routed along the axle (2).

2. The vehicle (V) according to claim 1, further comprising:
a rod (7) that extends in a direction intersecting the axle (2), wherein
the electric wire (8) has a portion (8c) routed along the rod (7).

3. The vehicle (V) according to claim 2, wherein
the electric wire (8) has a portion passing through the interior of the rod (7).

4. The vehicle (V) according to claim 2 or 3, wherein
the electric wire (8) has a bent portion (8b) that is bent between the portion (8a) routed along the axle (2) and the portion (8c) routed along the rod (7).

5. The vehicle (V) according to claim 4, wherein
the bent portion (8b) is bent in a direction away from the vehicle wheel (3).

## Patentansprüche

1. Fahrzeug (V), umfassend:
eine erste Einheit (5), auf der eine rotierende elektrische Maschine (M) montiert ist;
eine zweite Einheit (6), auf der ein Wechselrichter (6a) montiert ist;
einen elektrischen Draht (8), der die erste Einheit (5) und die zweite Einheit (6) elektrisch verbindet; und
ein Fahrzeugrad (3), das stromabwärts der ersten Einheit (5) über eine Achse (2) dynamisch verbunden ist,
**dadurch gekennzeichnet, dass**
der elektrische Draht (8) von der Achse (2) getragen wird, und
der elektrische Draht (8) einen Abschnitt (8a) aufweist, der entlang der Achse (2) geführt ist.

2. Fahrzeug (V) nach Anspruch 1, ferner umfassend:
eine Stange (7), die sich in einer Richtung erstreckt, die die Achse (2) schneidet, wobei
der elektrische Draht (8) einen Abschnitt (8c) aufweist, der entlang der Stange (7) geführt ist.

3. Fahrzeug (V) nach Anspruch 2, wobei
der elektrische Draht (8) einen Abschnitt aufweist, der durch das Innere der Stange (7) verläuft.

4. Fahrzeug (V) nach Anspruch 2 oder 3, wobei
der elektrische Draht (8) einen gebogenen Abschnitt (8b) aufweist, der zwischen dem Abschnitt (8a), der entlang der Achse (2) geführt ist, und dem Abschnitt (8c), der entlang der Stange (7) geführt ist, gebogen ist.

5. Fahrzeug (V) nach Anspruch 4, wobei
der gebogene Abschnitt (8b) in einer Richtung weg von dem Fahrzeugrad (3) gebogen ist.

## Revendications

1. Véhicule (V) comprenant :
une première unité (5) sur laquelle une machine électrique rotative (M) est montée ;
une seconde unité (6) sur laquelle un onduleur (6a) est monté ;
un fil électrique (8) qui connecte électriquement la première unité (5) et la seconde unité (6) ; et
une roue de véhicule (3) qui est connectée dynamiquement en aval de la première unité (5) via un essieu (2),
**caractérisé en ce que**
le fil électrique (8) est supporté par l'essieu (2), et
le fil électrique (8) a une partie (8a) acheminée le long de l'essieu (2).

2. Véhicule (V) selon la revendication 1, comprenant en outre:
une tige (7) qui s'étend dans une direction coupant l'essieu (2), dans lequel
le fil électrique (8) a une partie (8c) acheminée le long de la tige (7).

3. Véhicule (V) selon la revendication 2, dans lequel
le fil électrique (8) a une partie passant à travers l'intérieur de la tige (7).

4. Véhicule (V) selon la revendication 2 ou 3, dans lequel
le fil électrique (8) a une partie courbée (8b) qui est courbée entre la partie (8a) acheminée le long de l'essieu (2) et la partie (8c) acheminée le long de la tige (7).

5. Véhicule (V) selon la revendication 4, dans lequel
la partie courbée (8b) est courbée dans une direction s'éloignant de la roue de véhicule (3).
